# EUROPEAN PATENT SPECIFICATION

(11) **EP 2 154 987 B1**
(45) Date of publication and mention of the grant of the patent: **14.10.2015**
(21) Application number: 08723941.4
(22) Date of filing: 04.04.2008
(51) Int. Cl.: A23F 5/12

(54) **METHOD FOR MANUFACTURING A COFFEE TABLET, AND A COFFEE TABLET FOR PREPARING COFFEE OBTAINED WITH SUCH METHOD**
VERFAHREN ZUR HERSTELLUNG EINER KAFFEETABLETTE, UND MIT SOLCH EINEM VERFAHREN ERHALTENE KAFFEETABLETTE FÜR DIE ZUBEREITUNG VON KAFFEE
PROCÉDÉ DE FABRICATION D'UNE PASTILLE DE CAFÉ ET PASTILLE DE CAFÉ POUR PRÉPARER UN CAFÉ OBTENUE AVEC CE PROCÉDÉ

(30) Priority: 06.04.2007 EP 07007268; 06.04.2007 EP 07007267
(43) Date of publication of application: 24.02.2010
(73) Proprietor: Koninklijke Douwe Egberts B.V., 3532 AD Utrecht (NL)
(72) Inventor: VAN BERGEN, Cornelis, NL-3992 RB Houten (NL)
(74) Representative: Hatzmann, Martin
(86) International application number: PCT/NL2008/050190
(87) International publication number: WO 2008/123775

(56) References cited:
- EP-A1- 0 229 920
- GB-A- 588 354
- GB-A- 1 293 989
- GB-A- 190 223 379
- US-A- 3 801 716

## Description

The invention relates to a method for manufacturing a coffee tablet.

The intended tablet must be suitable for use in a drip filter coffee machine. This means that the tablets are to be placed in a filter placed in a filter holder of such a machine and, with normal use of the drip filter coffee machine, are to lead to a coffee brew with a desired strength and taste.

GB-A-23379 discloses a coffee tablet which is manufactured by compressing coffee at 40-70 ATM.

GB-A-588354 discloses compression of pulverised or fibrous foodstuffs, such as coffee, at a pressure of 100-1200 kg/cm².

EP-229920 discloses a process for making coffee tablets comprising compacting, under a pressure from 20.7 MPa to 48,3 MPa, a mass of roast and ground coffee particles having a moisture content of at least 3% by weight and a mean particle size from 0,4 mm to 2,0 mm.

It is important that such a coffee tablet has a particular strength. When such a coffee tablet is manufactured with the aid of a relatively low compressive pressure, a coffee tablet with a relatively low hardness is obtained. Such a coffee tablet has a relatively low firmness and there is a good chance that during packaging and/or transport, it does not remain in one piece. When such a coffee tablet is manufactured with the aid of compacting the grindings at a relatively high pressure, a relatively firm coffee tablet is obtained. Such a coffee tablet is sufficiently strong to remain in one piece during packaging and/or transport, however, the quality of the coffee prepared with it is relatively poor, more particularly the brewing strength of the obtained brew is relatively low (less than 80%, relative to the brewing strength obtained with the same amount, but non-compacted coffee).

The present invention is based on the insight that when a coffee tablet is used in the preparation of a coffee in a standard filter coffee machine, this coffee tablet can be designed such that it gradually disintegrates during the preparation process. Research has shown that in such a manner, with such a coffee tablet, the coffee extracts are gradually released from the compacted coffee grindings. As a result, only desired coffee extracts are extracted from the coffee grindings. Gradual disintegration prevents over-extraction and, hence, also the extraction of undesired disadvantageous substances such as, for instance, bitter tasting chlorogenic acids from the coffee grindings, which does occur when preparing coffee from loose coffee grindings. Therefore, coffee prepared with the coffee tablet is a milder coffee than the prepared coffee that is formed when loose ground coffee is used during the preparation of the coffee.

The object of the present invention is to provide a method for manufacturing a coffee tablet for preparing coffee therewith, which does not have the above-mentioned drawbacks. More particularly, the object of the present invention is to provide a method for manufacturing a coffee tablet, wherein the coffee tablet obtains a composition or hardness such that the coffee tablet can withstand packaging and transport without disintegrating at undesired moments, and, at the same time, is suitable for preparing a qualitatively good coffee.

To this end, the invention provides a method according to claim 1.

Research has shown that the coffee parameters mentioned are significant for obtaining a coffee tablet with a particular minimum and maximum hardness. The minimum hardness is important for preventing disintegration of the coffee tablet, and the maximum hardness is important especially for the capacity of gradual disintegration during preparation of the coffee and the quality of the coffee dependent thereon. It is noted that the hardness of the coffee tablet is determined by the force required for crushing a coffee tablet, and therefore, the hardness of the coffee tablet is expressed in Newton. Crushing is carried out by placing the coffee tablet between two vertically disposed plates, movable towards and away from each other in horizontal direction. When the plates move towards each other, the force applied by the coffee tablet to the movable plate is measured. Here, the bean is in a direction transverse to the groove side between the plates and therefore, the plates press on the coffee bean-shaped tablet by their "long sides".

When the coffee parameter values of the coffee parameters, such as moisture content of the coffee starting material, degree of roast of the coffee starting material and/or pouring volume of the coffee starting material are selected well, the coffee tablet, having been manufactured at a particular pressure, will have a particular hardness. As the hardness of the coffee tablet can be controlled well in this manner, the coffee tablets manufactured with the method will gradually disintegrate when preparing coffee. The chance of disintegration during packaging and/or transport at such a hardness is relatively low, while the prepared coffee from the coffee tablets obtained in this manner is a qualitatively good coffee (minimally 80-% of the brewing strength obtained when brewing coffee utilizing the same amount of loose coffee grindings of the same type). To this end the particular compressive pressure is in the range of 70 - 130 bar, and the hardness of the coffee tablet, depending on the coffee parameter values at the particular compressive pressure, is in the range of 20 - 75 N, preferably more particularly 30 - 55 N. The compressive pressure is the pressure required for compacting the coffee starting material, for instance in the shape of coffee grindings, into the desired coffee tablet shape.

The degree of roast of the coffee starting material after grinding thereof depends on, *inter alia,* the roasting time of the coffee beans, the roasting temperature and the amount of coffee starting material roasted at one time. The lower the degree of roast of the coffee starting material, the darker the coffee is. It has appeared that darker coffee can be compacted better than lighter coffee for obtaining a tablet with the required strength or hardness. The degree of roast of the coffee starting material is determined by measuring the reflection of light on a levelled amount of ground coffee starting material. This can be carried out with, for instance, an agtron unit. An amount of light is directed at the levelled amount of grindings, for instance of a wavelength of 640 nm. Depending on the darkness of the grindings, an amount of light is reflected and measured. The value indicates the degree of roast. The coffee parameter value of the degree of roast of the coffee starting material prior to pressing the coffee tablet is in the range of 80 - 30, preferably 60 - 40, and is, more particularly, substantially 50. With coffee starting material with these values, upon compacting, a tablet with required strength is obtainable which, furthermore, disintegrates at the correct rate when in contact with water.

Compacting the coffee starting material for obtaining a firm coffee tablet further depends on the pouring volume of the coffee starting material, therefore, the volume of the coffee after grinding. The higher the pouring volume, the better the coffee starting material can be compacted for forming a firm coffee tablet. To that end, the coffee parameter value of the pouring volume of the coffee starting material prior to compacting is in the range of 500 - 850 ml per 250 g coffee starting material and, more particularly, is approximately 700 ml per 250 g coffee starting material. The pouring volume of coffee starting material is determined by measuring the volume of 250 g of coffee after grinding. In order to determine this volume, an amount of ground coffee starting material is poured from a funnel into a tray provided thereunder to that end, which tray has a volume of 250 ml. The tray has a slide which is closed, so that the volume of coffee grindings of 250 ml remains in the tray. Then, the weight of the coffee grindings in the tray is determined and converted into a pouring volume expressed in ml/250g.

It has further appeared that the moisture content of the coffee starting material is of influence on the degree of compacting of the coffee starting material and is also important for the hardness of the eventual coffee tablet and the eventual quality of the prepared coffee. In general, it has been found that a higher moisture content yields better results. The coffee parameter value of the moisture content of the coffee starting material prior to compacting the coffee tablet is 2 - 8%, preferably 2 - 6% and, more particularly, approximately 4%. The moisture content of the coffee starting material is formed in that the coffee starting material is quenched with moisture before the coffee starting material is ground. The moisture content is determined by measuring an extent of weight loss of 5 g coffee starting material as a result of drying the coffee starting material in an oven for 3 hours at 103°C.

It is particularly advantageous if the coffee parameter values degree of roast, pouring volume and moisture content do not exceed the boundaries mentioned of the range mentioned at that coffee parameter value. When one of the coffee parameters is outside the boundaries mentioned, the quality of the coffee prepared with the coffee tablet will be relatively poor. A well-drinkable coffee with a high quality is obtained when the coffee parameters mentioned are within the ranges mentioned. It is preferred that first, the degree of roast of the coffee starting material is determined and, depending thereon, the moisture content and/or the pouring volume of the coffee starting material is determined. In this manner, the different parameters can be adjusted during the manufacturing process to thus increase the quality of the eventual coffee tablet.

According to a further elaboration of the invention, the coffee starting material is coffee grindings obtained by grinding roasted coffee beans. According to a further elaboration of the invention, the coffee starting material is preferably ground to form coffee grindings with a particle size of 0.3 - 0.6 mm, more particularly with a particle size of 0.45 mm.

According to a further elaboration of the invention, it is furthermore advantageous when, after grinding the roasted beans, the coffee grindings are not finished before compacting of the grindings. When the coffee grindings are finished, the sharp angles of the coffee particles of the grindings are removed. The coffee particles obtain a rounder shape which is less favourable to the strength of the tablet obtained therefrom through compacting. Non-finished coffee grindings have better properties for manufacturing the coffee tablet with the desired hardness.

According to a further elaboration of the invention, after compacting the coffee tablet with a first hardness, around the compacted coffee tablet, at least one further layer of coffee starting material is composed with the same or with a different hardness, so that the coffee tablet comprises at least two layers of different hardnesses. In a further elaboration of the invention, the compacted coffee tablet is encapsulated by at least one liquid-soluble capsule. Such a composition of the coffee tablet can further have advantageous results for the capacity of disintegration of the coffee tablet during preparation of the coffee. Also, when several capsules are present, by varying the values of the different hardnesses of the different layers and/or by varying the different sorts of compositions of soluble capsules, the course of the disintegration of the coffee tablet during the preparation of coffee can be varied. This can also have an influence on the hardness of the coffee tablet and the capacity for not disintegrating upon, for instance, packaging and/or transport of the coffee tablets.

The invention also provides a coffee tablet according to claim 10.

Such a coffee tablet enables the coffee starting material being gradually exposed to the liquid during the extraction process. By gradually exposing the coffee starting material to the liquid, over-extraction during the extraction process is prevented. Over-extraction can result in release of substances from the coffee grindings that are disadvantageous for the taste. An example of such a disadvantageous substance is chlorogenic acid. Chlorogenic acid can give the prepared coffee a bitter taste and can also have an irritating effect on the gastric and intestinal walls. Other harmful substances are maleic acid, mailic acid, chinic acid, caffeine and trigonelline. When loose coffee grindings is used in the filter for preparing the coffee beverage, the amount of soluble dry matter in the coffee grindings is taken up in the coffee brew relatively rapidly. This means that the desired coffee extracts are extracted relatively rapidly from the loose coffee grindings during through-flow of the hot water through the loose coffee grindings. As a result, over-extraction takes place. Research has shown that when preparing coffee, when loose coffee grindings are used in a filter under standard conditions, the first 50 vol. % of the coffee brew contains already approximately 90 - 95% of the soluble dry matter from the coffee grindings. During the preparation of the last 50 vol. % of the coffee brew, the last percents of the soluble dry matter are extracted. With it, also, a part of the earlier mentioned undesired disadvantageous substances is extracted from the coffee grindings. Through the use of a tablet, designed such that, during the extraction process the beverage starting material is gradually exposed to the liquid, dispensing the soluble dry matter proceeds more gradually. Dispensing the dry matter takes place during the entire through-flow cycle of the water through the starting material. As a result, the release of these disadvantageous substances, which are undesirable to the taste, from the starting material, is reduced, and they do not end up in the eventually prepared beverage, or to at least a lesser extent. Consequently, a milder coffee is obtained which also has a less bitter taste than a coffee prepared by means of loose coffee grindings.

The coffee parameter value of the degree of roast of the coffee starting material is in the range of 80 - 30, preferably between 60 - 40, and, more particularly, is substantially 50.

The coffee parameter value of the pouring volume of the coffee starting material is in the range of 500-880 ml per 250 g of coffee starting material and, more particularly, approximately 700 ml per 250 g of coffee starting material and preferably, and the coffee parameter value of the moisture content of the coffee starting material is 2 - 8 %, more preferably is 2 - 6% and, more particularly, is approximately 4%.

Preferably, a tablet according to the invention does not contain additional substances, so that no taste affecting substances are present.

With a tablet according to the invention, coffee can be prepared using a standard, commercially available drip filter coffee machine. Such a drip filter coffee machine is, for instance, a readily commercially available filter coffee machine with common brewing conditions, therefore, times and temperatures that are usual when preparing coffee from loose coffee grindings. Such an apparatus has a flow rate of, for instance, 0.5 -10 ml coffee per second. Here, in an advantageous manner, the coffee tablet can be brought into a filter placed in a filter holder, whereupon hot water can be poured over. Without spilling coffee grindings on the counter or worktop, the coffee tablet is simply placed into the filter which is in the filter holder, while the dosing of the amount of coffee is particularly simple, for instance in that the number of tablets corresponds to the desired number of cups of coffee. When, with the same apparatus, instead of loose coffee grindings, an amount of coffee tablets corresponding to the amount of coffee grindings is placed in the filter, surprisingly, milder coffee is obtained than when preparing coffee with loose coffee grindings.

Further elaborations of the invention are described in the subclaims and will hereinbelow be explained in further detail, with reference to the drawing. In the drawing:
Fig. 1 shows a diagram of the compressive pressure and the hardness of a coffee tablet;
Fig. 2 shows a perspective view of a tablet according to the invention;
Fig. 3 shows a cross-section of the embodiment shown in Fig. 2;
Fig. 4 shows a second embodiment of a compacted tablet in cross-section;
Fig. 5 shows a first embodiment of a tablet with two capsules; and
Fig. 6 shows a second embodiment of a tablet with two capsules.
Fig. 7 shows a diagram in which the course of extracting dry matter from loose coffee grindings and the course of extracting dry matter from a coffee tablet according to the invention are represented.

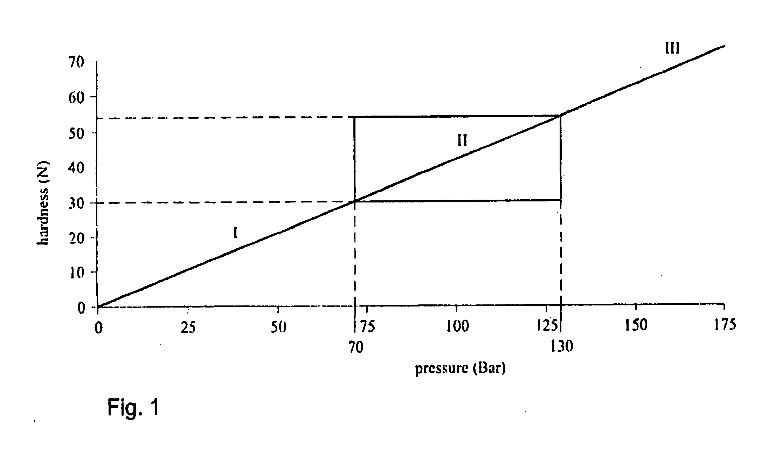

In Fig. 1, a diagram is disclosed wherein the compressive pressure required for manufacturing a coffee tablet designed for preparing coffee therewith is plotted against the hardness of the coffee tablet. Such a coffee tablet is designed for gradually disintegrating during a coffee preparation process, so that the coffee extracts are gradually released to the water flowing therethrough to thus obtain a relatively mild coffee. Such coffee tablets are intended for preparing coffee in standard, commercially available filter coffee machine, for instance for filter coffee machines with common brewing conditions, hence, times and temperatures which are usual when brewing coffee from loose coffee grindings.

In the diagram, three areas are indicated. When a coffee tablet is manufactured by means of a compressive pressure from area I, the hardness of the coffee tablet will be relatively low. Such a coffee tablet will readily disintegrate, for instance already during packaging and/or transport of the coffee tablet.

When using a compressive pressure from area III, a relatively hard coffee tablet is obtained. However, such a tablet has as a drawback that when preparing coffee, the tablet does not disintegrate in a desired manner, as the tablet is too hard, and therefore not suitable for gradually releasing coffee extracts to the water flowing therethrough. This results in a coffee with poorer properties.

Area II indicates the area from which a particular compressive pressure can be used for manufacturing the coffee tablet. The possible compressive pressure is between 70 and 130 bar, with which a coffee tablet can be manufactured with a hardness of 20 - 75N, more particularly 30 - 55 N. The hardness of the coffee tablet achieved with the selected compressive pressure depends on a number of coffee parameters. These coffee parameters are: the moisture content of the coffee starting material, the degree of roast of the coffee starting material and the pouring volume of the starting material. By favourably selecting the coffee parameter values of these coffee parameters, a desired hardness of the coffee tablet at a particular compressive pressure can be realized.

The coffee parameter value of the degree of roast of the coffee starting material is in the range of 80- 30, preferably between 60 - 40, and is more particularly substantially 50. The darker the coffee, that is, the lower the value, the better the properties of the coffee starting material as to the compactibility thereof and the hardness or strength of the tablet obtained therewith.

The compactibility and, hence, the hardness or strength of the tablet is further positively influenced by a relatively high pouring volume of the coffee starting material. The coffee parameter value of the pouring volume of the coffee starting material is therefore preferably in the range of 500 - 800 ml per 250 g of coffee starting material and is, more particularly, approximately 700 ml per 250 g coffee starting material.

The third coffee parameter which is important to the compactibility of the coffee starting material and, hence, the hardness or strength, is the moisture content of the material. At a moisture content of 2 - 8%, preferably 2 - 6%, and more particularly approximately 4%, good results are obtained.

Examples of coffee tablets with a good hardness for both disintegration during preparation of the coffee and a hardness suitable for packaging and transporting, are coffee tablets with for instance, the following coffee parameter values:
Example 1:
   Moisture content 4%
   Degree of roast 52
   Pouring volume 700 ml/250 g
   Compressive pressure 110 bar
   Hardness 40 - 55 N
Example 2:
   Moisture content 3.5 - 4%
   Degree of roast 45
   Pouring volume 660 ml/250 g
   Compressive pressure 110 bar
   Hardness 40 - 55 N

It is noted that coffee starting material in the form of loose grindings normally used for preparing coffee in an extra-fine grind filter coffee machine has a moisture content of approximately 3% and a pouring volume of approximately 650 ml/250 for preparing a qualitatively good coffee. This coffee starting material with such values cannot be tableted, or only poorly so.

Other coffee parameters such as blend composition, such as Robusta or Arabica, the roasting time or batch size during roasting have no significant influence on the eventual hardness of the coffee tablet at a particular compressive pressure.

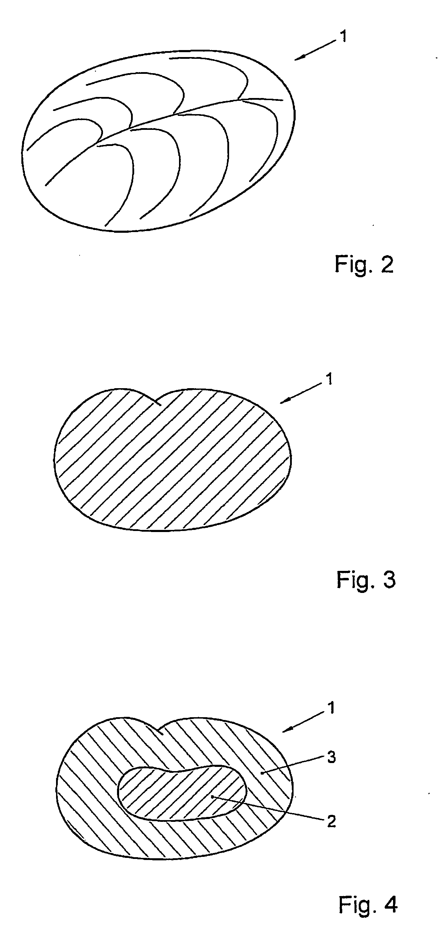

Fig. 2 shows a perspective view of a coffee tablet for preparing coffee manufactured with the method according to the invention. The coffee tablet 1 comprises coffee starting material, such as coffee grindings. In the exemplary embodiment shown, the coffee tablet 1 has the exterior appearance of a large coffee bean. However, this is done only for aesthetic reasons and has no technical effect.

The coffee tablet 1 has a particular hardness which is in the range of 20 - 75 N, more particularly 30 - 55 N. This hardness is obtained from an amount of coffee starting material compacted at a particular compressive pressure. As described hereinabove, the particular hardness of the coffee tablet at a particular compressive pressure is obtained depending on a number of coffee parameters, such as moisture content, degree of roast and pouring volume of the coffee starting material. Preferably, the coffee starting material are grindings obtained by grinding roasted coffee beans. The values of the coffee parameters are selected such that the hardness of the coffee tablet is designed for disintegration thereof at a desired moment, in a desired manner.

Preferably, the coffee tablet 1 has a weight of 2 - 15 g, more particularly a weight of 6 - 8 g. Such tablets simplify dosing an amount of coffee for preparing the desired amount of coffee. The amount of coffee starting material in one tablet 1 may correspond to a standard unit of coffee of the desired strength to be produced therewith, for instance, the amount of coffee starting material in one tablet 1 corresponds to one cup of coffee or one jug of coffee of the desired strength.

A standard unit of coffee to be prepared can, for instance, be a cup of coffee, a pot of coffee or a different unit with a specific content. With a particular weight of a tablet 1, for instance, two tablets 1 can be placed in the holder for obtaining a cup of coffee with a particular strength. For, presently, preparing a pot of coffee for ten cups, twenty tablets 1 can be placed in the holder. It is clear that the number of tablets 1 to be used depends on the desired strength of the coffee, the weight of the compacted coffee starting material per tablet 1 and/or the amount of water that is fed through the filter of the coffee machine.

Fig. 3 shows a cross-section of the coffee tablet 1 represented in Fig. 1. It is a coffee tablet 1 which is manufactured by compacting coffee grindings. The coffee tablet 1 comprises no additions other than the coffee grindings itself. The degree of compaction is determinative of the speed at which the coffee tablet 1 disintegrates when it is brought into contact with hot water. Preferably, the gradual disintegration takes up as much time as the entire extraction process for preparing the coffee, so that during the entire extraction process, each time, fresh coffee grindings are exposed to the water. Thus, the release of undesired substances as a result of over-extraction is reduced, and a relatively mild coffee is obtained.

In Fig. 4, a variant is shown wherein the coffee tablet 1 is provided with a core 2 of coffee grindings compacted more firmly than the peel 3 of coffee grindings encapsulating the core 2, which has been compacted less firmly. As a result thereof, a first amount of coffee starting material will be exposed to the water relatively rapidly, while the second amount of coffee starting material from the core 2 is only exposed later. Thus, the exposure profile of the coffee starting material can be varied, so that a greater variation of desired flavours can be obtained. Naturally, variants hereon are conceivable. For instance, the coffee tablet 1 has a first part 2 with a first hardness and at least a second part 3 provided therearound with the same hardness or other hardness from the first hardness. In this manner, for instance, a coffee tablet 1 can be manufactured around which a layer 3 of a different material is provided, such as a creamer and/or sugar.

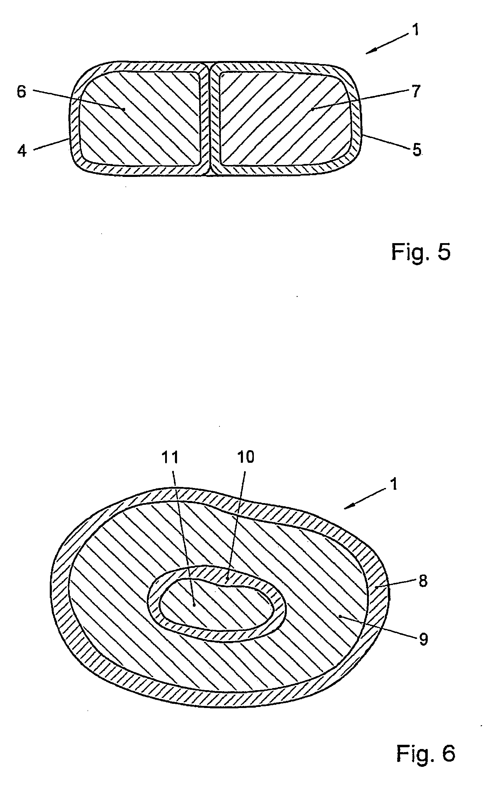

Fig. 5 shows a variant of the coffee tablet 1, provided with two capsules 4, 5 which are each soluble in water. The capsule 4 dissolves more rapidly than capsule 5, so that the material 6 in the capsule 4 is released more rapidly than the material 7 in capsule 5. The two capsules 4 and 5 are disposed side by side and are interconnected. The beverage material 6, 7 can for instance be coffee grindings. It is also possible that one of the beverage materials 6, 7 comprises, for instance, a creamer, sugar or aroma. The capsules 4, 5 could also, for instance, be manufactured from a material containing sugar or milk powder or a coffee creamer. Instead of, or in combination with different materials, also, with differences in capsule wall thickness the moment of exposure of the starting material present in the capsule 4, 5 can be varied.

Fig. 6 shows a variant wherein the coffee tablet 1 is provided with an outer capsule 8 that encapsulates a first amount of beverage starting material 9 and an inner capsule 10. In turn, the inner capsule 10 encapsulates a second amount of starting material 11. The two capsules 8 and 10 may have been manufactured from the same material, or from different materials. Also, the capsule wall thicknesses can differ from each other. For this exemplary embodiment it holds that the beverage starting material 9, 11 can, for instance, be coffee grindings or one of the beverage starting materials 9, 11 can, for instance, comprise a creamer and/or sugar.

The use of such capsules 8, 10 is advantageous as they can provide an additional firmness to the compacted coffee starting material, which is favourable during packaging and transporting the coffee tablets 1. Since the capsules 8, 10 dissolve during preparation of the coffee, the coffee tablets 1 gradually disintegrate and gradually release the coffee extracts so that a mild coffee with a good quality is obtained. Before the second amount of coffee starting material 11 is released, first, the outer capsule 8 must be dissolved and then also the inner capsule 10. As a result thereof, the coffee starting material is gradually exposed to the liquid, more particularly the water. The advantage is that through the solubility of the capsules 8, 10, it can be accurately regulated at what moment the various amounts of the average starting material included in the tablet 1 are released. Thus, the taste of the beverage can be optimally regulated.

Coffee tablets provided with a single capsule are also understood to form part of the invention. Here, the capsule may be manufactured from sugar or coffee powder of a combination thereof. Other additions too can be incorporated in the capsule. Here, mocha, cocoa and the like can be considered.

Further, the coffee parameters mentioned, at a specific compressive pressure during manufacture of the tablets, are selected preferably such that the tablet, when dropped from 1.5 meters, loses no more than 5% of its weight in crumbling pieces. Such a tablet has the advantage that it does not shatter into bits when the consumer drops the tablet on the floor.

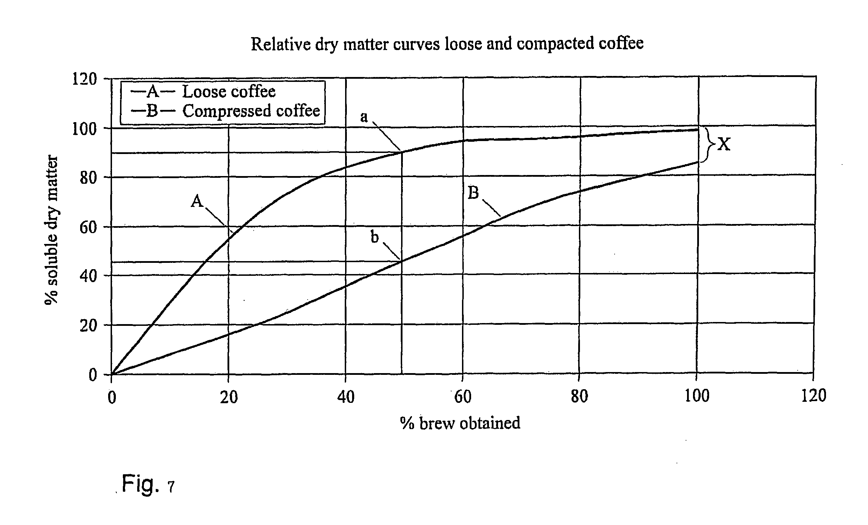

In Fig. 7, curve A shows the course of the extraction of soluble components from the dry matter of the coffee starting material when coffee is prepared from loose coffee grindings. To this end, the loose coffee grindings are placed in a holder, to which water is supplied, preferably at a temperature of approximately 85°C. The easily soluble coffee components are extracted from the coffee grindings first. Approximately 90- 95% of the dry matter is used for preparing approximately 50 vol. % of the coffee (see point a in Fig. 7). During the preparation of the remaining 50 vol. % of the coffee, the remainder of the dry matter is used and also, over-extraction takes place. As a result, also, disadvantageous undesired components from the coffee starting material end up in the prepared coffee. This causes a bitter taste of the coffee. Such disadvantageous components are, for instance, chlorogenic acid, maleic acid, mailic acid, chinic acid, caffeine and/or trigonelline.

Curve B in Fig. 7 indicates the course of the extraction process of coffee components when coffee is prepared with the aid of tablets according to the invention, more particularly with tablets as shown in Figs. 2 and 3, i.e. a tablet manufactured from homogeneously compacted coffee grindings. At least one tablet 1 per unit of coffee to be prepared is placed in the filter of the coffee filter machine. Then, an amount of hot water is supplied to the tablets 1, so that the tablets 1 gradually disintegrate. Due to the disintegration of the tablets during the brewing process of the coffee, the coffee extracts are gradually released from the coffee starting material. The release of the extracts exhibits a virtually linear connection. As a result, after the preparation of approximately 50 vol. % of the coffee, also approximately half of the dry matter of the coffee grindings is used (see point b in Fig. 7). For preparing the next 50 vol. % of the coffee, the second half of the dry matter present is used. Consequently, the risk of over-extraction is much smaller than when loose coffee grindings is used. Depending on the degree of compaction of the ground coffee in the tablet 1, it is even possible that not all dry matter is used during the preparation of the coffee. As can be seen in Fig. 7, when 100 vol. % of coffee is prepared, curve B is x percent below the level of the use of 100% dry matter. The fact that not all dry matter is used appears to be of no noticeable influence to the taste of the prepared coffee.

It is noted that when tablets 1 are used wherein the ground coffee beans are compacted at a greater pressure, the directional coefficient of curve B becomes smaller. As a result, x will become greater at 100 vol. % of prepared coffee brew.

It will be clear that the invention is not limited to the exemplary embodiment described, but that various modifications are possible within the framework of the invention, as defined by the claims. For instance, the coffee tablet can have various forms, and further materials and/or additives may have been added to the coffee starting material.

## Claims

1. A method for manufacturing a coffee tablet designed for preparing coffee therewith, wherein an amount of coffee starting material being coffee grindings obtained by grinding roasted coffee beans, is compacted at a particular compressive pressure so that a coffee tablet with a particular hardness is obtained, wherein after grinding of the roasted beans, the coffee grindings are not finished prior to compacting of the grindings, while the particular hardness at a particular compressive pressure depends on a number of coffee parameters, including moisture content of the coffee starting material, degree of roast of the coffee starting material, and pouring volume of the coffee starting material, wherein the particular compressive pressure is in the range of 70 -130 bar ( 7-13MPa), and the hardness of the coffee tablet, depending on the coffee parameter values at the particular compressive pressure, is in the range of 20 - 75 N, wherein the degree of roast of the coffee starting material prior to compacting of the coffee tablet is in the range of 80 - 30, wherein the pouring volume of the coffee starting material prior to compacting the coffee tablet is in the range of 500 - 880 ml per 250 g of coffee starting material, and wherein the moisture content of the coffee starting material prior to compacting of the coffee tablet is 2 - 8%, such that the obtained hardness of the coffee tablet effects the disintegration thereof at a desired moment, in a desired manner.

2. A method according to claim 1, wherein the hardness of the coffee tablet is in the range of 30 - 55 N.

3. A method according to any one of the preceding claims, wherein the degree of roast of the coffee starting material prior to compacting of the coffee tablet is between 60 - 40, and, more particularly, is substantially 50.

4. A method according to any one of the preceding claims, wherein the pouring volume of the coffee starting material prior to compacting the coffee tablet is approximately 700 ml per 250 g of coffee starting material.

5. A method according to any one of the preceding claims, wherein the moisture content of the coffee starting material prior to compacting of the coffee tablet is 2 - 6% and, more particularly, is approximately 4%.

6. A method according to any one of claims 3 - 5, wherein the coffee parameter values of degree of roast, pouring volume and moisture content do not exceed said limits of the range mentioned for that coffee parameter value.

7. A method according to any one of claims 4 - 7, wherein, first, the degree of roast of the coffee starting material is determined and, depending thereon, the moisture content and/or the pouring volume of the coffee starting material is determined.

8. A method according to any one of claims 3 - 7, wherein the coffee starting material is ground to form coffee grindings with a particle size of 0.3 - 0.6 mm, more particularly with a particle size of 0.45 mm.

9. A method according to any one of the preceding claims, wherein after compacting the coffee tablet with a first hardness around the compacted coffee tablet, at least one further layer of coffee starting material is composed with a different hardness, so that the coffee tablet comprises at least two layers of different hardnesses.

10. A coffee tablet for preparing coffee, manufactured with a method according to any one of the preceding claims, wherein the coffee tablet has a particular hardness which has been obtained from an amount of compacted coffee starting material compacted at a particular compressive pressure in the range of 7-13 MPa, wherein the particular hardness at a particular compressive pressure is obtained depending on a number of coffee parameters, including:
• a moisture content of the coffee starting material being in the range of 2-8% ,
• a degree of roast of the coffee starting material prior to compacting of the coffee tablet being in the range of 80 - 30; and
• a pouring volume of the coffee starting material prior to compacting the coffee tablet being in the range of 500 - 880 ml per 250 g of coffee starting material;
wherein the coffee tablet has a hardness which is in the range of 20 - 75 N and wherein the coffee tablet has a weight of 2-15 g, wherein the coffee parameter values have been selected such that the hardness of the coffee tablet is designed for disintegration thereof at a desired moment, in a desired manner.

11. A coffee tablet according to claim 10, wherein the coffee tablet has a hardness which is in the range of 30 - 55 N.

12. A coffee tablet according to any one of claims 12 - 13, wherein the coffee tablet has a weight of 6 - 8 g.

13. A coffee tablet according to any one of claims 10 - 12, wherein the coffee tablet comprises a first part with a first hardness and at least a second part provided therearound with the same hardness or a different hardness from the first hardness.

14. A coffee tablet according to any one of claims 10 - 13, wherein the said coffee parameters at a particular compressive pressure during manufacture of the tablet are selected such that the tablet, when dropped from 1.5 meters, loses no more than 5% of its weight in crumbling pieces.

## Patentansprüche

1. Verfahren zur Herstellung einer Kaffeetablette, um damit Kaffee zuzubereiten, wobei eine Menge von Kaffeeausgangsmaterial in Form von Kaffeevermahlungen, erhalten durch Vermahlen von gerösteten Kaffeebohnen, bei einem bestimmten Kompressionsdruck kompaktiert werden, sodass eine Kaffeetablette mit einer bestimmten Härte erhalten wird, wobei nach dem Vermahlen der gerösteten Bohnen die Kaffeevermahlungen vor dem Kompaktieren der Vermahlungen nicht fertig sind, während die bestimmte Härte bei einem bestimmten Kompressionsdruck von einer Anzahl von Kaffeeparametern abhängig ist, darunter der Feuchtegehalt des Kaffeeausgangsmaterials, der Röstungsgrad des Kaffeeausgangsmaterials und das Schüttvolumen des Kaffeeausgangsmaterials, wobei der bestimmte Kompressionsdruck im Bereich von 70-130 Bar (7-13 MPa) ist und die Härte der Kaffeetablette, abhängig von den Kaffeeparameterwerten bei dem bestimmten Kompressionsdruck, im Bereich von 20-75 N ist, wobei der Röstungsgrad des Kaffeeausgangsmaterials vor dem Kompaktieren der Kaffeetablette im Bereich von 80-30 ist, wobei das Schüttvolumen des Kaffeeausgangsmaterials vor dem Kompaktieren der Kaffeetablette im Bereich von 500-880 ml pro 250 g Kaffeeausgangsmaterial ist, und wobei der Feuchtegehalt des Kaffeeausgangsmaterials vor dem Kompaktieren der Kaffeetablette 2-8 % ist, sodass die erhaltene Härte der Kaffeetablette deren Auflösung zu einem bestimmten Zeitpunkt in einer gewünschten Weise beeinflusst.

2. Verfahren nach Anspruch 1, wobei die Härte der Kaffeetablette im Bereich von 30-55 N ist.

3. Verfahren nach einem der vorhergehenden Ansprüche, wobei der Röstungsgrad des Kaffeeausgangsmaterials vor dem Kompaktieren der Kaffeetablette zwischen 60-40 und insbesondere im Wesentlichen 50 ist.

4. Verfahren nach einem der vorhergehenden Ansprüche, wobei das Schüttvolumen des Kaffeeausgangsmaterials vor dem Kompaktieren der Kaffeetablette ungefähr 700 ml pro 250 g Kaffeeausgangsmaterial ist.

5. Verfahren nach einem der vorhergehenden Ansprüche, wobei der Feuchtegehalt des Kaffeeausgangsmaterials vor dem Kompaktieren der Kaffeetablette 2-6 % und insbesondere ungefähr 4 % ist.

6. Verfahren nach einem der Ansprüche 3-5, wobe die Kaffeeparameterwerte von Röstungsgrad, Schüttvolumen und Feuchtegehalt die Grenzen des für den Kaffeeparameterwert genannten Bereiches nicht überschreiten.

7. Verfahren nach einem der Ansprüche 4-7, wobei zuerst der Röstungsgrad des Kaffeeausgangsmaterials bestimmt wird und, abhängig davon, der Feuchtegehalt und/oder das Schüttvolumen des Kaffeeausgangsmaterials bestimmt werden.

8. Verfahren nach einem der Ansprüche 3-7, wobei das Kaffeeausgangsmaterial gemahlen wird, um Kaffeevermahlungen mit einer Partikelgröße von 0,3-0,6 mm, insbesondere mit einer Partikelgröße von 0,45 mm, zu bilden.

9. Verfahren nach einem der vorhergehenden Ansprüche, wobei nach dem Kompaktieren der Kaffeetablette mit einer ersten Härte um die kompaktierte Kaffeetablette wenigstens eine weitere Schicht von Kaffeeausgangsmaterial mit einer anderen Härte zusammengesetzt wird, sodass die Kaffeetablette mindestens zwei Schichten mit unterschiedlicher Härte umfasst.

10. Kaffeetablette zur Zubereitung von Kaffee, hergestellt in einem Verfahren nach einem der vorhergehenden Ansprüche, wobei die Kaffeetablette eine bestimmte Härte hat, erhalten von einer Menge von kompaktiertem Kaffeeausgangsmaterial, kompaktiert bei einem bestimmten Kompressionsdruck im Bereich von 7-13 MPa, wobei die bestimmte Härte bei einem bestimmten Kompressionsdruck abhängig von einer Anzahl von Kaffeeparametern erhalten wird, darunter:
- ein Feuchtegehalt des Kaffeeausgangsmaterials im Bereich von 2-8%,
- ein Röstungsgrad des Kaffeeausgangsmaterials vor dem Kompaktieren der Kaffeetablette im Bereich von 80-30; und
- ein Schüttvolumen des Kaffeeausgangsmaterials vor dem Kompaktieren der Kaffeetablette im Bereich von 500-880 ml pro 250 g Kaffeeausgangsmaterial;
wobei die Kaffeetablette eine Härte hat, die im Bereich von 20-75 N ist und wobei die Kaffeetablette ein Gewicht von 2-15 g hat, wobei die Kaffeeparameterwerte so ausgewählt sind, dass die Härte der Kaffeetablette für deren Auflösung zu einem bestimmten Zeitpunkt in einer gewünschten Weise konzipiert ist.

11. Kaffeetablette nach Anspruch 10, wobei die Kaffeetablette eine Härte hat, die im Bereich von 30-55 N ist.

12. Kaffeetablette nach einem der Ansprüche 12-13, wobei die Kaffeetablette ein Gewicht von 6-8 g hat.

13. Kaffeetablette nach einem der Ansprüche 10-12, wobei die Kaffeetablette einen ersten Teil mit einer ersten Härte umfasst und mindestens einen zweiten darum herum bereitgestellten Teil mit derselben Härte oder einer anderen Härte als der ersten Härte.

14. Kaffeetablette nach einem der Ansprüche 10-13, wobei die Kaffeeparameter bei einem bestimmten Kompressionsdruck während der Herstellung der Tablette so gewählt sind, dass die Tablette, wenn sie aus 1,5 m fallengelassen wird, nicht mehr als 5% ihres Gewichts in krümelnden Stücken verliert.

## Revendications

1. Un procédé de fabrication d'une pastille de café conçue pour la préparation de café, dans lequel une quantité de café formant la matière première de départ, consistant en éclat de café obtenue par broyage de grains de café torréfiés, est compactée à une pression de compression particulière des grains de café torréfiés de telle sorte que l'on obtienne une pastille de café présentant une dureté particulière,
• dans lequel, après broyage des grains torréfiés, les éclats de café ne sont pas en leur état final préalablement au compactage de ces éclats,
• dans lequel la dureté particulière pour une pression de compression particulière dépend d'un nombre de paramètres du café, incluant
∘ la teneur en humidité du café formant la matière première de départ,
∘ le taux de torréfaction du café formant la matière première de départ, et
∘ le volume de coulée du café formant la matière première de départ,
• dans lequel la pression de compression particulière est dans l'intervalle de 70 à 130bars (7 à 13MPa) et la dureté de la pastille de café, en fonction des valeurs des paramètres de café pour une pression de compression particulière, est dans la plage de 20 à 75N,
• dans lequel le taux de torréfaction du café formant la matière première de départ,, avant compactage de la pastille de café, est de l'ordre de 80 à 30,
• dans lequel le volume de coulée du café formant la matière première de départ, avant compactage de la pastille de café, est de préférence dans la plage de 500 à 880ml par 250g du café formant la matière première de départ et
• dans lequel la teneur en humidité du café formant la matière première de départ, avant compactage de la pastille de café, est de 2 à 8%, de sorte que la dureté de la pastille de café obtenue effectue sa désintégration à un moment souhaité, d'une manière souhaitée.

2. Un procédé selon la revendication 1, dans lequel la dureté de la pastille de café est dans la plage de 30 à 55N.

3. Un procédé selon l'une quelconque des revendications précédentes, dans lequel le taux de torréfaction du café formant la matière première de départ, avant compactage de la pastille de café, est compris entre 60 à 40 et, plus particulièrement, est sensiblement égal à 50.

4. Un procédé selon l'une quelconque des revendications précédentes, dans lequel le volume de coulée du café formant la matière première de départ, avant compactage de la pastille de café, est d'environ 700ml par 250g du café formant la matière première de départ.

5. Un procédé selon l'une quelconque des revendications précédentes, dans lequel la teneur en humidité du café formant la matière première de départ, avant compactage de la pastille de café, est de 2 à 6% et, plus particulièrement, est approximativement de 4%.

6. Un procédé selon l'une quelconque des revendications 3 à 5, dans lequel les valeurs de paramètres du taux de torréfaction du café, le volume de coulée et la teneur en humidité ne dépassent pas lesdites limites des intervalles indiqués pour la valeur des paramètres du café.

7. Un procédé selon l'une quelconque des revendications 4 à 7, dans lequel, tout d'abord est déterminé le taux de torréfaction du café formant la matière première de départ et, en fonction de celui-ci, sont alors déterminés la teneur en humidité et/ou le volume de coulée du café formant la matière de départ.

8. Un procédé selon l'une quelconque des revendications 3 à 7, dans lequel le café formant la matière première départ est broyé pour former des éclats de café dont la taille des particules est de 0,3 à 0,6mm, et plus particulièrement dont la taille des particules est de 0,45mm.

9. Un procédé selon l'une quelconque des revendications précédentes, dans lequel, après le compactage de la pastille de café conférant une première dureté à la pastille de café compacté, au moins une couche supplémentaire de café formant la matière de départ est formée d'une dureté différente, de sorte que la pastille de café comprend au moins deux couches de duretés différentes.

10. Une pastille de café pour préparer du café, de préférence fabriquée par un procédé selon l'une quelconque des revendications précédentes, dans laquelle la pastille de café présente une dureté particulière qui a été obtenue pour une quantité du café formant la matière de départ, compactée à une pression de compression particulière de l'ordre de 7 à 13 MPa, dans laquelle la dureté particulière pour une pression de compression particulière est obtenue en fonction d'un nombre de paramètres du café, incluant:
• une teneur en humidité du café formant la matière première de départ comprise entre 2 et 8%,
• un taux de torréfaction du café formant la matière première de départ, avant compactage de la pastille de café, compris entre 80 à 30, et
• un volume de coulée du café formant la matière première de départ, avant compactage de la pastille de café, compris entre 500 et 880ml par 250g de café formant la matière première de départ,
laquelle pastille de café présente une dureté qui est comprise dans l'intervalle de 20 à 75 N et présente un poids de 2 à 15g,
les valeurs des paramètres du café étant choisies de telle sorte que la dureté de la pastille de café est telle que sa désintégration se produise à un moment souhaité, d'une manière souhaitée.

11. Une pastille de café selon la revendication 10, dans lequel la pastille de café a une dureté comprise entre 30 et 55N.

12. Une pastille de café selon l'une quelconque des revendications 12 ou 13, le poids de la pastille de café étant de 6 à 8g.

13. Une pastille de café selon l'une quelconque des revendications 10 à 12, laquelle pastille de café comprend une première partie présentant une première dureté, et au moins une deuxième partie disposée autour d'elle présentant la même dureté ou une dureté différente de la première dureté.

14. Une pastille de café selon l'une quelconque des revendications 10 à 13, dans laquelle lesdits paramètres de café, pour une pression de compression particulière lors de la fabrication du comprimé sont choisis de telle sorte que la pastille, en cas de chute de 1,5mètres, ne perde pas plus de 5% de son poids en morceaux effrités.
